# EUROPÄISCHE PATENTSCHRIFT

(11) **EP 1 210 861 B1**
(45) Veröffentlichungstag und Bekanntmachung des Hinweises auf die Patenterteilung: **26.01.2005**
(21) Anmeldenummer: 02003612.5
(22) Anmeldetag: 18.07.1998
(51) Int. Cl.: A01F 15/07

(54) **Vorrichtung zum Pressen und Umwickeln von Rundballen**
Apparatus for pressing and wrapping round bales
Presse et appareil pour envelopper des balles rondes

(30) Priorität: 24.07.1997 DE 19731520
(43) Veröffentlichungstag der Anmeldung: 05.06.2002
(62) Teilanmeldung aus: 98113453.9
(73) Patentinhaber: Usines Claas France S.A., 57140 St. Remy / Woippy (FR)
(72) Erfinder: Biller, Bernd, 42111 Wupperthal (DE); Liebich, Dirk, 42499 Hückeswagen (DE)
(74) Vertreter: Kus, Sascha

(56) Entgegenhaltungen:
- DE-A- 4 120 733
- DE-A- 4 208 091

## Beschreibung

Die Erfindung betrifft eine Vorrichtung zum Pressen und Umwickeln von Rundballen aus Heu, Halbheu, Stroh oder ähnlichem Halmgut, bestehend aus einer Ballenpresse und einer Verpackungsvorrichtung, welche beide über zumindest einem sich auf Laufrädern abstützenden Rahmengestell miteinander verbunden sind und einer in Längsrichtung bewegbaren Transportvorrichtung, welche einen fertig gewickelten Rundballen von der Ballenauswurfsöffnung zur Verpackungsvorrichtung transportiert Gattungsgemäße Vorrichtungen sind aus der Landwirtschaft bekannt und bestehen in der einfachsten Ausführung aus einer Rundballenpresse, welche an einem vorhandenen Schlepper angehängt wird und zum Aufnehmen von Heu oder Stroh vorgesehen ist. Das Heu oder Stroh wird in der Rundballenpresse unter einem gleichzeitigen Pressvorgang in der Trommel zu einem Rundballen gewickelt, der nach Erreichen einer vorbestimmten Größe durch eine hintere Klappenöffnung ausgeworfen wird und im gewickeltem Zustand auf dem Feld liegen bleibt. Durch die Witterungseinflüsse bedingt verrottet das auf diese Weise gepresste Heu und kann dem späteren Verwendungszweck nicht in dem vorgesehenen Umfang zugeführt werden. Um die Haltbarkeit und Lagerzeit der aufgewickelten Rundballen zu erhöhen werden im Weiteren Wickelvorrichtungen vorgeschlagen, welche teilweise als einzelne anhängbare oder separate Maschinen ausgebildet sind und die aufgewickelten Rundballen vom Feld aufnehmen, umwickeln und anschließend wieder abwerfen. Alternativ hierzu sind an einer Ballenpresse anhängbare Wickelvorrichtungen bekannt, weiche die gewickelten Rundballen übernehmen und einwickeln, wobei die bekannten Ausführungen der Verpackungsvorrichtungen eine Reihe von Nachteilen aufweisen. Eine solche Vorrichtung ist beispielsweise aus der WO-A-90/14756 bekannt, wobei das Rundballenwickelgerät an die Ausstoßöffnung der Rundballenpresse angeschlossen ist. Der Wickeltisch ist nur zum Abladen des mit der Kunststofffolie umwickelten Rundballen nach hinten absenkbar. Für die Beladung des Wickeltisches mit der aus der Ballenpresse ausgestoßenen Rundballen und zu dessen Umwicklung dient ein Ladebügel. Dieser greift in die Stirnfläche des Rundballens ein und hebt diesen auf den Wickeltisch, dabei muss der Schwenkweg so gewählt werden, dass der Ballen über die Kante des Wickeltisches frei bewegt werden kann. Gleichzeitig ist der Abstand zur Haube der Rundballenpresse so zu wählen, dass diese ausgehend vom geöffneten Zustand nach dem Ausstoßen des Rundballens wieder geschlossen werden kann. Nachteilig ist die besonders große Baulänge des Rundballenwickelgerätes, welche zu einer eingeschränkten Manövrierfähigkeit im Gelände und auf der Straße führt. Des Weiteren ist von Nachteil, dass der Rundballen freischwebend über die Tischkante zu heben ist, um Beschädigungen des gepressten Rundballens zu verhindern. Beim Abwurf hingegen fällt der umwickelte Rundballen auf seine Zylinderfläche und die etwa 5-fach anfliegenden Lagen der Einwickelfolie können ggf. durch ein Eindringen von Fremdkörpern beschädigt werden, so dass die Dichtheit der Umwicklung nicht mehr gegeben ist. Dadurch, dass das Wickelgerät in Fahrtrichtung starr mit der Rundballenpresse verbunden ist und eine starre Fahrachse aufweist, werden die Laufräder des Wickelgerätes bei Kurvenfährten des Gerätezuges seitlich stark verschoben, was für die Feld- und Straßenfahrten nicht von Vorteil ist. Ferner ist es nachteilig, dass es sich um ein Spezialgerät handelt, das nicht zur Aufnahme der auf dem Feld abgelegten Rundballen und zum stationären Betrieb geeignet bzw. hierzu ausbaufähig ist, so dass die Akzeptanz für solche Geräte nicht besonders groß ist.

Aus der EP-A-0 391 884 ist im Weiteren eine Vorrichtung zum Umwickeln eines Rundballens bekannt, welche zum Anhängen an die Dreipunktaufhängung eines Schleppers vorgesehen ist. Die Vorrichtung weist einen Ballenladebügel und einen verschwenkbaren Wickeltisch auf, welcher nach hinten, in entgegengesetzter Richtung zur Anordnung des Schleppers verschwenkt werden kann. Die Vorrichtung dient zur Aufnahme von bereits fertig gepressten Rundballen vom Erdboden durch den Ballenladebügel, wobei nach der Aufnahme und Lagerung des Rundballens auf dem Wickeltisch der Wickelvorgang eingeleitet wird und nach Abschluss des Wickelvorganges ein Abwerfen in der Aufnahmerichtung erfolgt. Die Vorrichtung ist nur im Zusammenhang mit einem Schlepper direkt einsetzbar weil eine Standsicherheit nur nach dem Anhängen am Schlepper gewährleistet ist. Ferner wird die Standsicherheit durch eine oberhalb des Wickeltisches an einem Tragarm aufgehängte Wickelmaterialhaltevorrichtung durch den besonders hoch angeordneten Schwerpunkt beeinträchtigt.

Aus der EP-0543145 B1 ist ferner ein Rundballenwickelgerät bekannt, welches sich durch einen niedrigen Schwerpunkt auszeichnet, wobei die Wickelarme drehbar unterhalb des Wickeltisches gelagert sind. Diese Ausführung eignet sich besonders für die Arbeit auf einem abschüssigen Feld, weil durch den niedrigen Schwerpunkt die Gefahr des Umkippens gegenüber der zuvor genannten bekannten Ausführung vermieden wird. Nachteilig wirkt sich hingegen die Baulänge der an den Schlepper angehängten Ballenpresse und Wickelvorrichtung aus, besonders wenn in engen Kurven der Schlepper mit dem angehängten Gerät über Zufahrtsstraßen an das Feld herangeführt wird und bei Wendemanövern im Feld. Bei unebenen Gelände können weitere Schwierigkeiten durch ein Aufsetzen der Schlepperkombination auf Erdhügel oder dergleichen entstehen.

Aus der DE-PS 41 20 733 ist im Weiteren eine fahrbarer Ballenpresse mit einer angebauten Wickelvorrichtung bekannt, bei der die Ballenpresse und Wickelvorrichtung durch einen starren Trägerrahmen miteinander verbunden sind und der Transport des Rundballens durch eine ausschließlich horizontal bewegliche Transportvorrichtung zwischen der Ballenpresse und der Wickelvorrichtung erfolgt. Nachteilig bei dieser Ausführung ist einerseits die starre Baueinheit, welche zu den vorgenannten Problemen führt und andererseits die Übergabe des Rundballens von der Transportvorrichtung zum Wickeltisch erschwert ist, weil der Rundballen über die seitlich erhöhten Rollen des Wickeltisches angehoben werden muss. Das Anheben des Rundballens erfolgt in diesem Fall über einen Ladebügel, welcher mit der Transportvorrichtung schwenkbar verbunden ist und das relativ große Gewicht der Rundballen bewältigen muss. Des Weiteren ist der Tragarm für die Wickelvorrichtung am hinteren Ende des Rahmengestells angeordnet, wobei der Drehpunkt der Wickelarme oberhalb des Wickeltisches liegt und somit der Schwerpunkt der Wickelvorrichtung sehr hoch angeordnet ist und zu Problemen im abschüssigen Gelände führen kann. Aufgrund des starren Rahmengestells ist diese Kombination aus Ballenpresse und Wickelvorrichtung nicht verkürzbar und führt bei Kurvenfährten im Gelände und auf Straßen zu einem großen Wendekreis des hinteren Rahmengestells mit der Wickelvorrichtung.

Der Erfindung liegt die Aufgabe zugrunde, eine Vorrichtung zum Pressen und Umwickeln von Rundballen zu schaffen, bei der einerseits ein kontinuierliches Arbeiten möglich ist und andererseits eine raumsparende und kurzbauende Einheit mit einem niedrigen Schwerpunkt geschaffen wird, welche zu dem zu einer besseren Handhabbarkeit im Gelände und auf der Straße führt.

Erfindungsgemäß ist zur Lösung der Aufgabe in vorteilhafter Weise vorgesehen, dass die Transportvorrichtung den fertigen Rundballen nach Auswurf aus der Ballenpresse durch eine zumindest in einem Teilbereich gleichzeitige vertikale und horizontale Bewegung nach hinten anhebend zur Verpackungsvorrichtung bewegt, wobei dem Wickeltisch eine Neigungsregelung zugeordnet ist, die den Wickeltisch unabhängig von der Arbeitslage der Verpackungsvorrichtung in der Horizontalen hält. Dies hat vor allem den Vorteil, dass der von dem Wickeltisch aufgenommenen Ballen verrollungsfrei von diesem transportiert wird.

Durch die besondere Anordnung und Bewegung der Transportvorrichtung, mit einem gleichzeitigen Verfahren nach hinten und anheben des Rundballens, zumindest über einen Teilbereich kann der Schwerpunkt der Ballenpresse auf einem niedrigen Niveau gehalten werden und der Auswurf des Rundballens aus der Ballenpresse kann in vorteilhafter Weise selbsttätig nach hinten durch das Eigengewicht des Rundballens unmittelbar auf die Transportvorrichtung erfolgen. Die Transportvorrichtung wird im Weiteren durch die vertikale und horizontale Bewegung mit samt dem Rundballen angehoben und der eigentlichen Wickelvorrichtung zugeführt. Der besondere Vorteil liegt hierbei darin, dass der fertig gewickelte Rundballen mit einem erheblichen Eigengewicht nicht über eine weitere Hebevorrichtung angehoben zu werden braucht, um in die geeignete Wickelposition zu gelangen, wodurch ein verringerter Arbeitsaufwand notwendig wird. Im Weiteren besteht die Möglichkeit, einen kontinuierlichen Arbeitsprozess ablaufen zulassen, weil einerseits in der Ballenpresse bereits ein neuer Rundballen gewickelt werden kann, während in der Wickelvorrichtung der bereits ausgeworfene Rundballen umwickelt wird. Nach Beendigung des Wickelvorganges, weicher vor Fertigstellung des nächsten Rundballens erfolgt, wird zunächst der umwickelte Rundballen abgelegt und so dann mittels der abgesenkten Transportvorrichtung der nächste aus der Ballenpresse ausgeworfene Rundballen aufgefangen und ebenfalls der Wickelvorrichtung zugeführt. Durch diesen rationellen und kontinuierlich ablaufenden Arbeitsprozess brauchen die fertigen Rundballen zwischendurch nicht auf dem Boden abgelegt und zu einem späteren Zeitpunkt wieder angehoben zu werden, wobei ferner in vorteilhafter Weise keine besonderen Ladebügel oder Hebevorrichtungen notwendig sind, die den Rundballen anheben müssen, weil die Transportvorrichtung gleichzeitig die horizontale Bewegung und das Anheben des Rundballens vornimmt.

In weiterer vorteilhafter Ausgestaltung der Erfindung kann die Transportvorrichtung aus einem zumindest in einem Teilbereich gleichzeitig vertikal und horizontal beweglichen Wickeltisch bestehen, so dass die Anzahl der beweglichen und unbeweglichen Komponenten der Verpackungsvorrichtung weiter verringert und gleichzeitig eine Kostenersparnis erzielt werden kann.

Um einen schnellen und kontinuierlichen Arbeitsprozess durchfuhren zu können ist ferner vorgesehen, dass die Klappenöffnung der Ballenpresse unabhängig von der Position der Transportvorrichtung mit oder ohne Rundballen zu öffnen oder zu schließen ist.

In weiterer Ausgestaltung der Erfindung ist vorgesehen, dass der Wickeltisch aus einem Rahmenelement besteht, in dem mindestens zwei antreibbare und quer zur Längsrichtung beabstandete Wickelrollen drehbar gelagert sind, welche in Längsrichtung angeordnete Wickeltischbänder aufweisen. Die Wickelrollen und Wickeltischbänder sind zur Aufnahme des ausgeworfenen Rundballens aus der Ballenpresse vorgesehen und besitzen im Weiteren einen eigenen Antrieb, welcher die Rotation des Rundballens beim Umwickeln ermöglicht. Der Rundballen liegt hierbei während des Wickelvorganges sicher in der aus den Wickelrollen und Wickeltischbändern gebildeten Mulde.

Um die gleichzeitige horizontale und vertikale Bewegung der Transportvorrichtung bzw. des Wickeltisches zu ermöglichen ist im Weiteren vorgesehen, dass das Rahmenelement vier Hubrollenachsen aufweist, welche diametral und paarweise gegenüberliegend angeordnet und über eine Hubrolle in jeweils einer schräg verlaufenden und nach hinten ansteigenden Führungsschiene verschiebbar gelagert sind. Durch die Hubrollen wird die Reibung erheblich reduziert und ermöglicht einen leichtgängigen Transport der Transportvorrichtung bzw. des Wickeltisches mit Rundballen in Richtung zur Wickelvorrichtung.

In weiterer besonderer Ausgestaltung der Erfindung ist vorgesehen, dass die Führungsschienen jeweils diametral gegenüberliegend und parallel verlaufend mit dem Rahmengesteil verbunden sind, wobei zumindest die hinteren Führungsschienen über ein Gelenk schwenkbar an dem Rahmengestell befestigt sind. Die Führungsschienen sind jeweils so angeordnet, dass der tiefste Punkt unterhalb des Ballenauswurfes der Ballenpresse liegt und der höchste Punkt unterhalb der Wickelvorrichtung, dass heißt der Wickeltisch wird nach der Aufnahme des Rundballens nach hinten bewegt und durch die schräg verlaufenden Führungsschienen gleichzeitig angehoben, wobei die Hubrollenachsen des Wickeltisches mit Hubrollen und Gleitlagern in den Führungsschienen über zumindest einen Stellzylinder verfahrbar gelagert sind. Durch die Schwenkbarkeit der hinteren Führungsschienen kann beispielsweise eine Absenkung des Wickeltisches nach hinten erreicht werden.

In weiterer Ausgestaltung der Erfindung ist vorgesehen, dass die Führungsschienen schräg verlaufend und nach hinten ansteigend ausgebildet sind, wobei zumindest an einem Ende ein horizontal verlaufenden Führungsansatz ausgebildet ist. Der horizontal verlaufende Führungsansatz ist zur Fixierurig des Wickeltisches in der Endposition vorgesehen und ermöglicht im Weiteren ein Halten des Wickeltisches mit einem geringen Kraftaufwand. Alternativ ist vorgesehen, dass die Führungsschienen des Wickeltisches im mittleren Bereich abgewinkelt oder gebogen ausgebildet sind. Jeweils einer Hubrolle des Wickeltisches ist jeweils eine Führungsschienen zugeordnet, so dass der Wickeltisch im Normalfall mit insgesamt vier Hubrollen und Führungsschienen auskommt.

Um eine größere Ballenpresse einsetzen zu können und größere Rundballen zu fertigen ist vorgesehen, dass die Führungsschienen des Wickeltisches im vorderen, unteren Bereich zunächst flach ansteigend und anschließend stärker ansteigend ausgebildet sind, so dass keine Behinderung beim Schließen der Klappenöffnung eintritt.

In weiterer besonderer Ausgestaltung der Erfindung ist in vorteilhafter Weise vorgesehen, dass das Rahmengestell mit den jeweils diametral gegenüberliegenden Führungsschienen mittels eines weiteren oder der vorhandenen Stellzylinder über ein Gelenk anhebbar ausgebildet ist und /oder dass die hinteren diametral gegenüberliegenden Führungsschienen über einen weiteren Stellzylinder nach Beendigung des Wickelvorganges nach hinten absenkbar ausgebildet sind. Durch diese besondere Ausgestaltung ergeben sich zwei weitere wesentliche Vorteile. Die Führungsschienen mit der Wickelvorrichtung können beispielsweise nach einer Blockierung des Wickeltisches durch einen Nutenstein oder dergleichen über den ersten Stellzylinder, welcher in zwei Richtungen verfahrbar sein muss, angehoben werden. Wenn der Wickeltisch innerhalb der Führungsschienen blockiert ist, schwenkt somit das Rahmengestell um das Gelenk nach oben und es wird eine Verkürzung der gesamten Baueinheit, bestehend aus Ballenpresse und Wickelvorrichtung, erzielt, welche somit zur einer Huckepackeinheit führt und wesentlich leichter im Gelände oder auf der Straße zu fahren ist. Die vorhandene Problematik der bekannten Ausführungen wird somit vermieden. Ein weiterer wesentlicher Vorteil besteht dann, wenn die beiden hinteren Führungsschienen, welche den hinteren Hubrollen zugeordnet sind, über einen weiteren Stellzylinder und um deren Drehachse nach hinten abgesenkt werden, wobei es sich beispielsweise um ein Gelenk handeln kann. In diesem Fall wird über den weiteren Stellzylinder der Abwurf des fertig umwickelten Rundballen im Gelände erleichtert, wobei der Rundballen selbsttätig vom Wickeltisch herabrollen kann und durch die geringe Bodenhöhe ohne Eigenbewegung auf dem Feld abgelegt werden kann.

In weiterer Ausgestaltung der Erfindung ist vorgesehen, dass nach Beendigung des Wickelvorganges und dem Absenken der hinteren Führungsschienen eine fest mit dem Rahmengestell verbundene Rolle gegen die Wickeltischbänder von unten drückt und die Wickeltischbänder im oberen Bereich spannt, so dass der Rundballen aus der Mulde zwischen den beiden Wickelrollen angehoben wird und eigenständig vom Wickeltisch rollen kann.

In weiterer besonderer Ausgestaltung der Erfindung ist vorgesehen, dass das Rahmengestell bzw. die hinteren Führungsschienen eine Ballenbremse aufweisen, weiche schwenkbar und quer zur Längsrichtung mit dem Rahmengestell bzw. den Führungsschienen verbunden ist, wobei die Ballenbremse unmittelbar durch einen weiteren Stellzylinder oder über einen Umlenkhebel und eine Schubstange absenkbar ist und nach dem Aufsetzen der hinteren Führungsschienen auf dem Boden die Ballenbremse löst und eine punktgenaue Ablage des Rundballens auf dem Gelände ermöglicht. Durch diese besondere Ausbildung der Erfindung besteht somit während der kontinuierlichen Arbeitsweise die Möglichkeit die Rundballen exakt und punktgenau möglichst ballenschonend ohne eine Eigenbewegung auf dem Feld abzulegen. Die Ballenbremse besteht aus zwei seitlichen um jeweils einen Drehpunkt verschwenkbare Tragarme, welche über eine Querstange miteinander verbunden sind und den Rundballen halten, wobei der Drehpunkt jeweils auf einer an den hinteren Führungsschienen befestigten Konsole angeordnet ist. Die Bewegung der Ballenbremse erfolgt gemäß einem Ausführungsbeispiel der Erfindung unmittelbar durch den Stellzylinder der hinteren Führungsschienen, wobei der Stellzylinder zum Absenken der hinteren Führungsschienen einenends mittig an einem um eine Drehachse verschwenkbaren Hebelarm und anderenends an den hinteren Führungsschienen befestigt ist und wobei der Hebelarm zum Anheben der hinteren Führungsschienen abstützend an einem Anschlag anliegt und an dem freien Ende des Hebelarms eine

Schubstange befestigt ist, die mit einem um eine Drehachse verschwenkbaren Winkelhebel verbunden ist, an dessen zweiten Ende eine mit der Ballenbremse verbundene Schubstange befestigt ist. Wenn die hinteren Führungsschienen eine Endposition erreicht haben, wird die Bewegung des auseinander fahrenden Stellzylinders durch den vom Anschlag weg bewegten Hebelarm und die erste Schubstange auf den Winkelhebel übertragen und durch die dadurch bewegte zweite Schubstange die Ballenbremse gelöst. Beim Anheben der hinteren Führungsschienen wird der Hebelarm zunächst auf den Anschlag zu bewegt und somit die Ballenbremse in die Ausgangsstellung zurückgefahren, sobald der Hebelarm am Anschlag anliegt erfolgt das Anheben der hinteren Führungsschienen und somit wird die Ausgangsposition des Wickeltisches erreicht.

Alternativ besteht die Möglichkeit, dass das Rahmengestell im hinteren Bereich einen beim Absenken der hinteren Führungsschienen auf den Boden aufsetzenden Fuß aufweist, wodurch die Bewegung der hinteren Führungsschienen gestoppt und die Ballenbremse durch die Hebelmechanik gelöst wird.

Im Zusammenhang mit den verschwenkbar gelagerten Führungsschienen an dem Rahmengestell besteht im weiteren die Möglichkeit, dass der Wickeltisch mit einer elektronischen Neigungsregelung ausgestattet ist, welche den Wickeltisch während des Wickelvorganges unabhängig von der Arbeitslage der Verpackungsvorrichtung in der Horizontalen hält.

In weiterer Ausgestaltung der Erfindung ist vorgesehen, dass die Verbindung zwischen Ballenpresse und Verpackungsvorrichtung starr durch ein Rahmengestell oder durch zwei über mindestens ein Drehgelenk miteinander verbundene Rahmengestelle erfolgt, welches eine horizontale Schwenkbewegung vorsieht. Die Ausführung mit einer starren Verbindung zwischen Ballenpresse und Verpackungsvorrichtung eignet sich vorteilhafter Weise für ein ebenes Gelände, während für bergiges und abschüssiges Gelände eine vertikale verschwenkbare Ausführung mit jeweils einem Rahmengestell für die Ballenpresse und die Verpackungsvorrichtung empfehlenswert ist und somit ein Aufsetzen des Schleppers mit angehängtem Gerät verhindert.

Im Falle zweier getrennter Baueinheiten für Ballenpresse und Verpackungsvorrichtung ist ferner vorgesehen, dass das Rahmengestell der Verpackungsvorrichtung über eine verriegelbare starre Aufhängung mit dem Rahmengestell der Ballenpresse verbindbar ist, so dass eine stabile Zugeinheit mit niedrigem Schwerpunkt geschaffen wird.

Für den Fall, dass der Durchmesser der Rundballen vergrößert werden soll wird in vorteilhafter Weise vorgeschlagen, dass die Achse der Laufräder gegenüber der Ballenpresse entgegen der Hauptfahrtrichtung durch eine dem Schwerpunkt angepasste Verlagerung nach hinten und/oder unten versetzt angeordnet ist oder zusätzliche anhängbare Laufräder für die Verpackungsvorrichtung vorgesehen sind, um das Gewicht aufzunehmen und gleichzeitig den Schwerpunkt niedrig zu halten, wobei die Ballenpresse für größere Rundballen angehoben wird.

Um das Auswerfen der Rundballen bei vorhandener Verpackungsvorrichtung zu ermöglichen und die Kippgefahr auszuräumen ist ferner vorgesehen, dass die Verpackungsvorrichtung ein Traggestell für einen Wickelarm aufweist, welches aus zumindest zwei vertikalen Stützen und mindestens zwei miteinander im Drehpunkt der Wickelarme verbundene horizontale oder schräg verlaufende Stützen besteht, wobei die vertikalen Stützen seitlich neben der Ballenauswurfsöffnung der Ballenpresse mit dem Rahmengestell verbunden sind und das Traggestell V- oder U-förmig zur Ballenpresse hin geöffnet ist und die seitlichen Stützen derart beabstandet sind, dass die Klappenöffnung der Ballenpresse zwischen den seitlichen Stützen frei beweglich ist.

Für besonders große Rundballen mit einem hohen Eigengewicht ist vorgesehen, dass die Verpackungsvorrichtung oder das Rahmengestell mit zumindest einem drehbar gelagerten und mitlaufenden Rad ausgestattet ist, um das Gewicht aufzunehmen.

Die Stellzylinder der Ballenpresse und Verpackungsvorrichtung können hierbei beispielsweise hydraulisch oder aber auch elektromotorisch betätigbar sein.

Die Erfindung wird im Weiteren anhand der Figuren naher erläutert.

Es zeigt
- Fig.1: eine Seitenansicht einer Ballenpresse mit Anbauvorrichtung für eine Verpackungsvorrichtung,
- Fig.2: eine Draufsicht der Ballenpresse gemäß Figur 1,
- Fig.3: eine Seitenansicht der erfindungsgemäßen Verpackungsvorrichtung mit Führungsschienen und Anhängevorrichtung,
- Fig.4: eine Draufsicht auf die Verpackungsvorrichtung gemäß Figur 3,
- Fig.5: eine schematische Seitenansicht der Ballenpresse mit geöffneter Haube und Transportvorrichtung zur Aufnahme des Rundballens sowie einem skizzierten Bewegungsablauf beim Auswurf,
- Fig.6: eine schematische Seitenansicht der Rundballenpresse und Transport-vorrichtung mit Bewegungsablauf des Rundballens beim Transport zur Verpackungsvorrichtung,
- Fig.7: eine schematische Seitenansicht der Rundballenpresse und Verpackungsvorrichtung mit Bewegungsablauf des Rundballens beim Ablegen von dem Wickeltisch,
- Fig.8: eine vereinfachte Seitenansicht der Verpackungsvorrichtung in einer angehobenen Position zum Fahren auf der Straße,
- Fig.9: eine vereinfachte Seitenansicht der Verpackungsvorrichtung mit der Wickelposition und der abgesenkten Position der hinteren Führungsschienen,
- Fig.10: einen Teilschnitt gemäß der Verbindungslinie A - A durch die Führungsschienen, Hubrolle und Hubrollenachse,
- Fig.11: einen weiteren Teilschnitt gemäß der Verbindungslinie B-B und
- Fig.12: eine vereinfachte Seitenansicht der Verpackungsvorrichtung gemäß Figur 3 mit Ballenbremse.

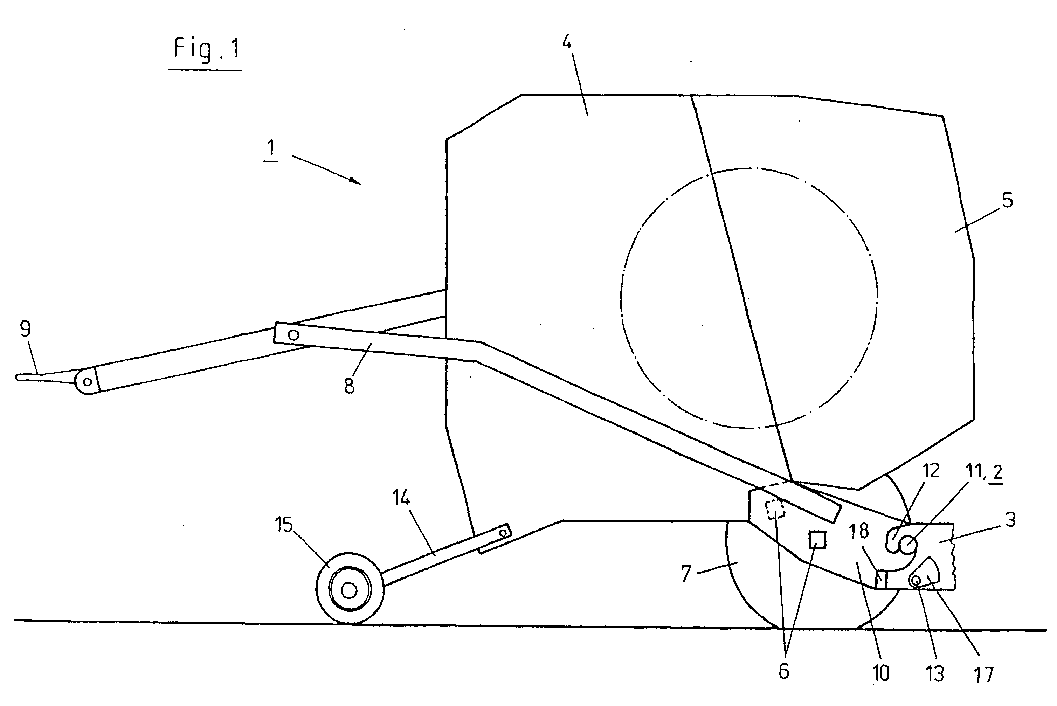

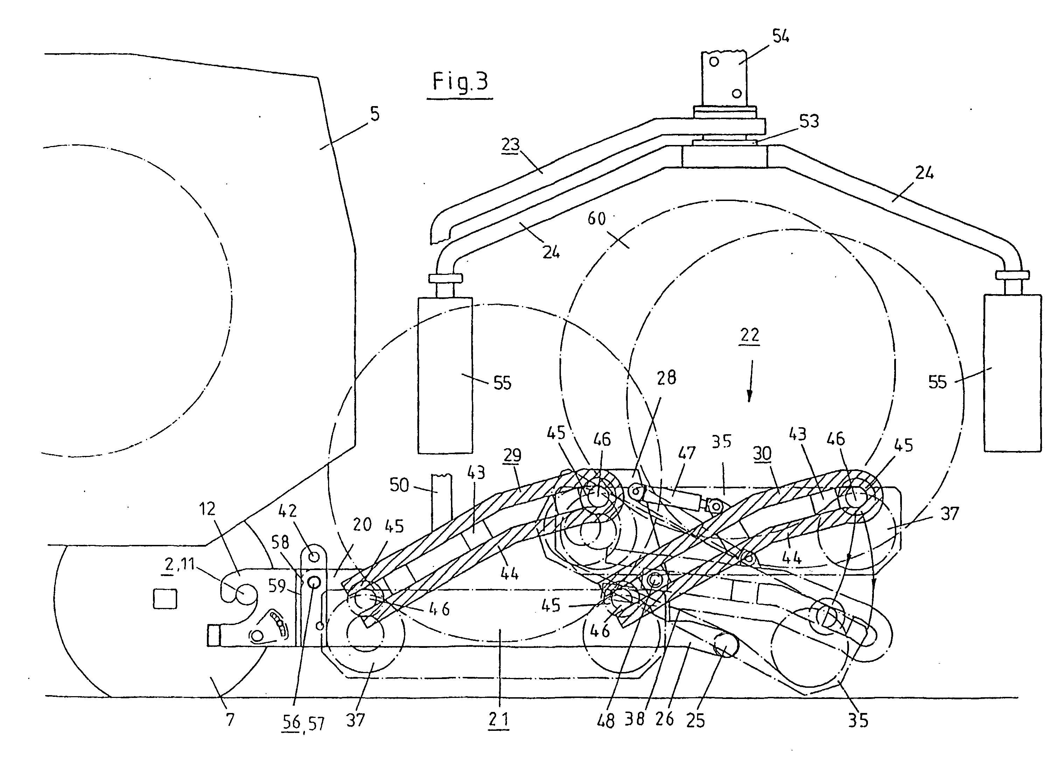

Figur 1 zeigt eine Seitenansicht einer Ballenpresse 1 mit Anbauvorrichtung 2 für die in Figur 3 gezeigte Verpackungsvorrichtung 3. Die Ballenpresse 1 besteht aus einem kastenförmigen Gehäuse 4, welches den nicht dargestellten Wickelmechanismus für den Rundballen aufnimmt und im hinteren Bereich eine Klappenöffnung 5 zum Auswurf des fertig gewickelten Rundballens aufweist. Das Gehäuse ist fahrbar auf einer hinteren Achse 6 mit zwei seitlichen Rädern 7 gelagert, wobei am Gehäuse 4 seitlich vorbeigeführte Längsstreben 8 ausgebildet sind, weiche nach vorne zusammenlaufenden mit der Zugdeichsel 9 für den Schlepper einerseits verschraubt sind und andererseits nach hinten bis zur Achse 6 reichen und eine Konsole 10 aufweisen, in welcher die Achse 6 drehbar gelagert ist, so dass die Zugkräfte unmittelbar auf die Achse 6 einwirken und das Gehäuse 4 frei von derartigen Belastungen ist. Im Normalfall ist die Achse 6 in der oberen Position angeordnet, zur Schwerpunktverlagerung und zum besseren Auswurf des fertigen Rundballens durch das Eigengewicht kann die Achse 6 in der gestrichelten Position angeordnet sein. An die seitlichen Konsolen 10 ist einerseits die Anbauvorrichtung 2 befestigt, welche aus einem Zapfen 11 zum Einhängen der korrespondierenden Aufhängung 12 der Verpackungsvorrichtung 3 vorgesehen ist. Zur starren Verbindung der Verpackungsvorrichtung 3 mit der Ballenpresse 1 ist im Weiteren ein Verriegelungsbolzen 13 vorgesehen, welcher unterhalb des Zapfens 11 durch eine Bohrung einschiebbar ausgebildet ist und einen verschwenkbaren Verriegelungskeil 17 aufweist und ferner ein Anschlag 18 an der Konsole 10 vorgesehen ist, an welchem die Stirnfläche der Aufhängung 12 zu liegen kommt. Zum Abstellen der Ballenpresse 1 ist vorne am Gehäuse 4 eine Strebe 14 mit einem Stützrad 15 vorgesehen, welches auf dem Boden aufliegt, wenn die Ballenpresse 1 vom Schlepper abgehängt wird.

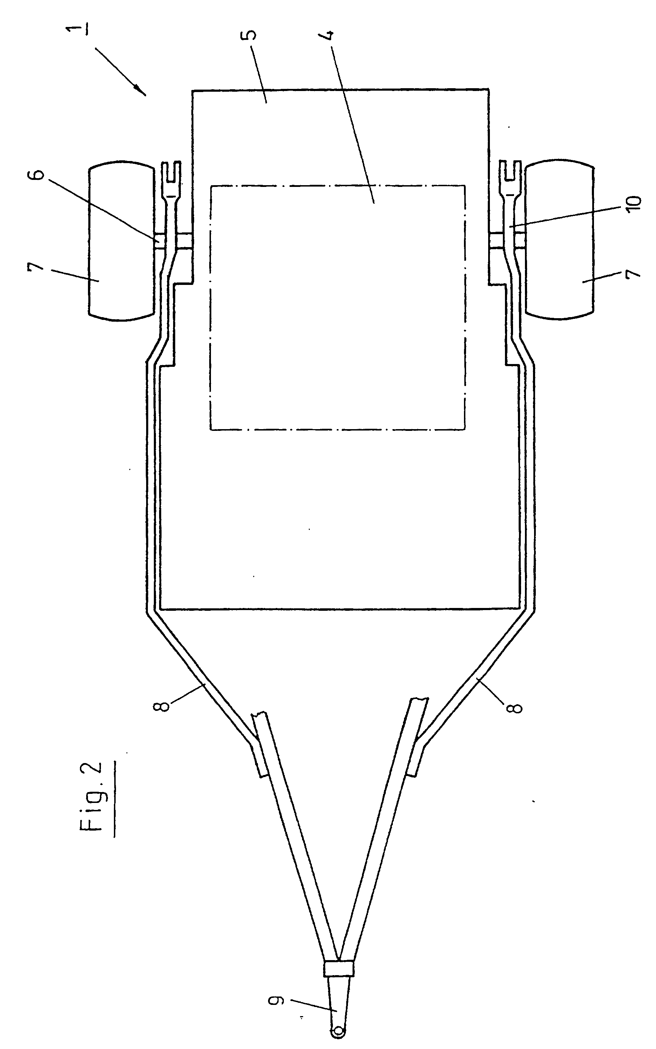

Figur 2 zeigt eine Draufsicht der Ballenpresse 1 gemäß Figur 1 mit dem kastenförmigen Gehäuse 4 und der hinteren Klappenöffnung 5. Aus dieser Draufsicht sind sehr gut die seitlich am Gehäuse 4 vorbeigeführten Längsstreben 8 erkennbar, welche vorne mit der Zugdeichsel 9 verbunden sind und hinten in den seitlichen Konsolen 10 die Anbauvorrichtung 2 enden. In den Konsolen 10 ist im weiteren die Achse 6 mit ihren Rädern 7 drehbar gelagert, so dass die Ballenpresse 1 als Zugeinheit für einen Schlepper mitlaufend ausgebildet ist. Über die Anbauvorrichtung 2 kann ebenso die angehängte Verpackungsvorrichtung 3 durch den Schlepper gezogen werden und führt zu einer unmittelbaren Zugkraftübertragung.

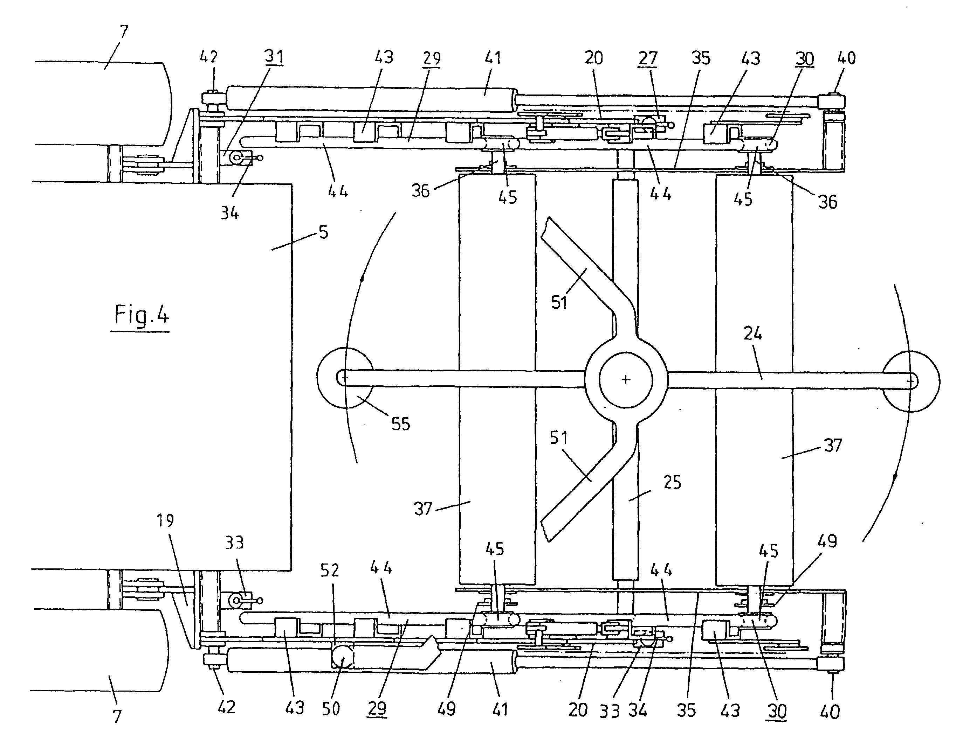

Figur 3 zeigt eine Seitenansicht und Figur 4 eine Draufsicht der erfindungsgemäßen Verpackungsvorrichtung 3 in einer angehängten Position an der Bellen2o presse 1, welche nur mit der Anbauvorrichtung 2, den Rädern 7 und der Klappenöffnung 5 dargestellt ist. Die Verpackungsvorrichtung 3 besteht aus zwei parallel angeordneten Wicklerseitenwänden 20, welche das Rahmengestell 21 der Verpackungsvorrichtung 3 bilden, einem Wickeltisch 22 sowie einem Tragarm 23 für die drehbar gelagerten Wickelarme 24. Die Wicklerseitenwände 20 stellen die tragenden Elemente der Verpackungsvorrichtung 3 dar und sind über eine quer liegende Rolle 25 bzw. deren Drehachse beabstandet miteinander verbunden, wobei ggf. weitere Querstreben zur Stabilitätsverbesserung vorgesehen sein können. Zur Ballenpresse 1 hin sind die Wicklerseitenwände 20 über eine Konsole 19 mit einem Querrohr auf das Maß der Anbauvorrichtung 2 derart reduziert, dass die Aufhängung 12 auf dem Zapfen 11 der nach hinten versetzten Anbauvorrichtung 2 zulegen kommt. Alternativ können die Wicklerseitenwände 20 zweifach abgewinkelt und auf das Maß der Anbauvorrichtung 2 zurückgeführt sein. Die Wicklerseitenwände 20 erstrecken sich im Übrigen in Längsrichtung der gesamten Zugeinheit und weisen einen hinteren, leicht nach unten verlaufenden Schenke 26 zur Befestigung jeweils einer Abstellstütze 27 sowie einen nach oben ragenden trapezförmigen Ansatz 28 auf, welcher u. a. zur Befestigung der vorderen Führungsschienen 29 und schwenkbeweglichen Lagerung der hinteren Führungsschienen 30 vorgesehen ist. Im vorderen Bereich der Wicklerseitenwände 20 ist jeweils eine Abstellstütze 31 mit den Wicklerseitenwänden 20 verbunden, welche zum Teil unmittelbar mit den Wicklerseitenwänden 20 oder über eine entsprechend geformte Konsole verschweißt sind. Die Abstellstützen 27, 31 bestehen jeweils aus einem höhenverstellbaren Fußteil 33, welches über eine Kurbel 34 bedienbar ist. Die Abstellstützen 27, 31 werden mittels der Kurbel 34 heruntergefahren und ermöglichen somit das Abstellen der Verpackungsvorrichtung 3 nach dem Lösen von der Ballenpresse 1.

Zwischen den Wicklerseitenwänden 20 ist der Wickeltisch 22 horizontal und vertikal verfahrbar angeordnet. Der Wickeltisch 22 besteht aus zwei parallel zu den Wicklerseitenwänden 20 angeordneten Wickeltischseitenwänden 35, welche durch die vordere und hintere Achse 36 der Wickelrollen 37 beabstandet gehalten sind und ggf. durch weitere Querstreben verstärkt werden können. Die Wickelrollen 37 sind in Längsrichtung mit mehreren Wickeltischbändern 38 bespannt, auf welchen der Rundballen zu liegen kommt. Ferner sind die Wickelrollen 37 jeweils auf einer Seite mit einem Antriebsrad in Form eines Zahnkranzes 49 ausgestattet, welcher über beispielsweise einen Kettenantrieb antreibbar ist und während des Wickelvorganges für eine Drehung des Rundballen über den Umfang sorgt, damit dieser über die gesamte Lauffläche und die Stirnflächen eingewickelt werden kann. Der Wickeltisch 22 weist ferner am hinteren Ende einen jeweils an die Wickeltischseitenwände 35 angeflanschten Zapfen 40 auf, der die Befestigung der beiden seitlich außen liegenden Stellzylinder 41 ermöglicht. Die Stellzylinder 41 sind mit ihrem feststehenden Teil jeweils über einen weiteren Zapfen 42 mit den Wicklerseitenwänden 20 schwenkbeweglich verbunden und ermöglichen somit bei einem Ein- oder Ausfahren die Bewegung des Wickeltisches 22 innerhalb der Führungsschienen 29, 30.

Die vorderen und hinteren Führungsschienen 29, 30 sind an der Innenseite der Wicklerseitenwände 20 befestigt und sind jeweils diametral gegenüberliegend und parallel verlaufend zu den Führungsschienen 29,30 derselben Wicklerseite angeordnet, wobei die Führungsschierlen 29,30 schräg nach hinten ansteigend angeordnet sind. Im gezeigten Ausführungsbeispiel sind die vorderen Führungsscheinen 29 ortsfest mit den Wicklerseitenwänden 20 verbunden, während die hinteren Führungsschienen 30 über ein Drehgelenk 48, wie aus der Figur 3 ersichtlich, mit den Wicklerseitenwänden 35 verbunden sind, so dass unabhängig von der Position des Wickeltisches 22 die hinteren Führungsschienen 30 abgesenkt werden können, um beispielsweise den Rundballen abzulegen.

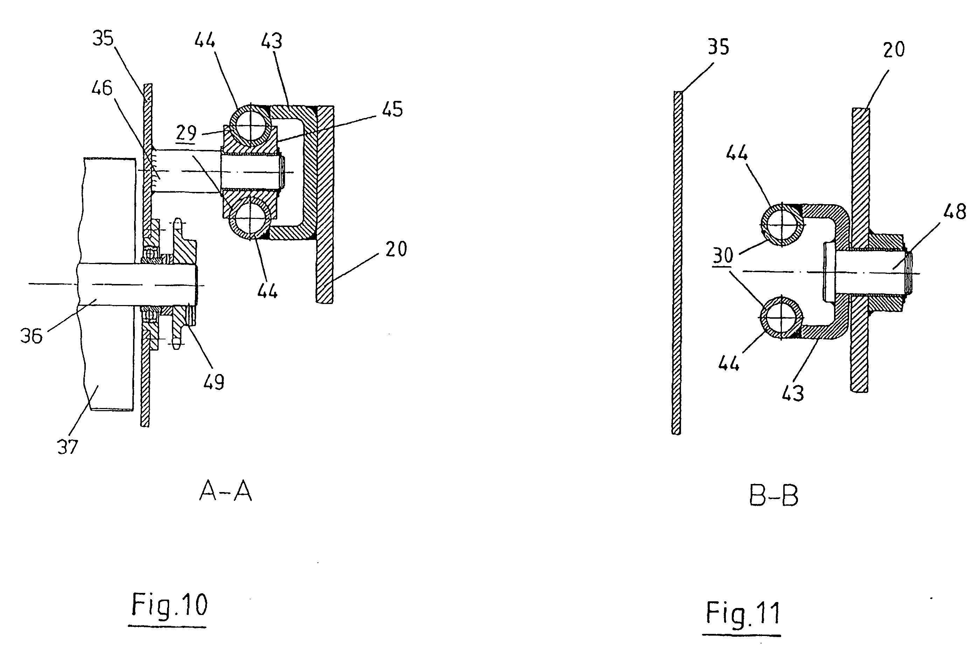

Die Führungsschienen 29, 30 bestehen jeweils aus einer U-förmig gebogenen Konsole 43, welche an ihren freien Schenkelenden mit einem Rundrohr 44 verschweißt sind und die Rundrohre 44 in einem genau definierten Abstand zueinander angeordnet sind und quasi eine Rollenbahn bilden. Die Rundrohre 44 sind auf dem zum Ballenwickeln hin gerichteten Ende offen, während das in entgegengesetzter Richtung weisende Ende geschlossen ist und der hintere Teilbereich eine Abknickung im mittleren Bereich und eine Abknickung zum Ende hin aufweist, um einerseits eine unterschiedliche Steigung der Rundrohre 44 zu ermöglichen und somit den Wickeltisch unterschiedlich anzuheben und andererseits eine stabile Endposition des Wickeltisches zu erreichen Die Konsolen 43 können über die gesamte Länge der Führungsschienen 29, 30 ausgebildet sein, oder aber, wie im Ausführungsbeispiel gezeigt, aus mehreren beabstandeten Konsolen 43 bestehen, die jeweils einer Führungsschiene 29, 30 zugeordnet sind. Zwischen den beiden Rundrohren 44 läuft eine Hubrolle 45, welche mit ihrer Radialfläche an den Radius des Rundrohres 44 angepasst ist und über ein Gleitlager auf einer Hubrollenachse 46 befestigt ist. Die Hubrollenachsen 46 sind entsprechend den Führungsschienen 29, 30 diametral gegenüberliegend und jeweils auf einer Seite des Wickeltisches 22 beabstandet und nach außen weisend angeordnet und mit den Wickeltischseitenwänden 35 verschweigt. Die genaue Anordnung ist aus dem Teilschnitt A - A der Figur 11 entnehmbar. Jeweils eine Führungsschiene 29 bzw. 30 ist einer Hubrollenachse 46 bzw. Hubrolle 45 des Wickeltisches 22 zugeordnet, so dass der Wickeltisch 22 gleichzeitig horizontal und vertikal verfahrbar zwischen den Wicklerseitenwänden 20 gelagert ist. Die Positionsverlagerung wird durch die seitlich angeordneten und beaufschlagbaren Stellzylinder 41 vorgenommen. Dadurch, dass die beiden Achsen 36 der Wickelrollen 37 über die Wickeltischseitenwände 20 in einem fest vorgegebenen Abstand gehalten sind, können diese nur parallel und gleichzeitig horizontal und vertikal verfahren werden.

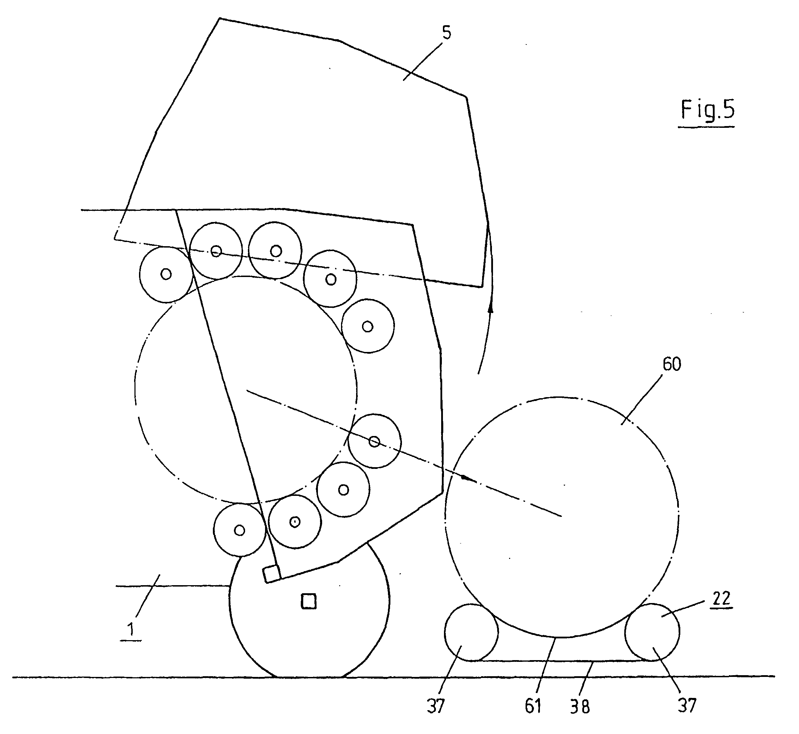

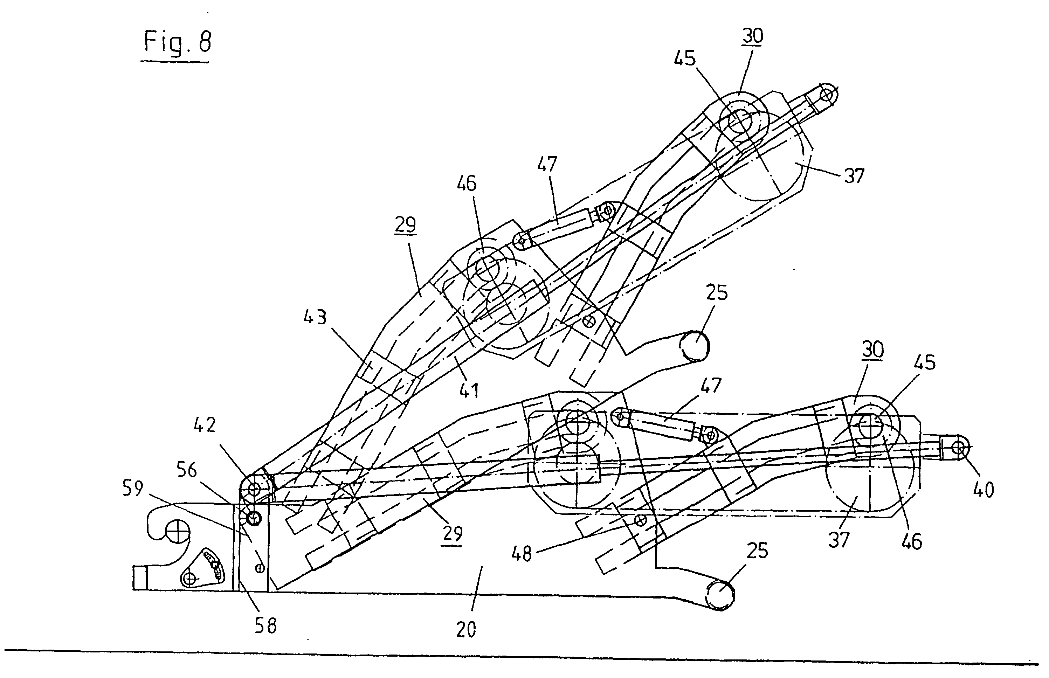

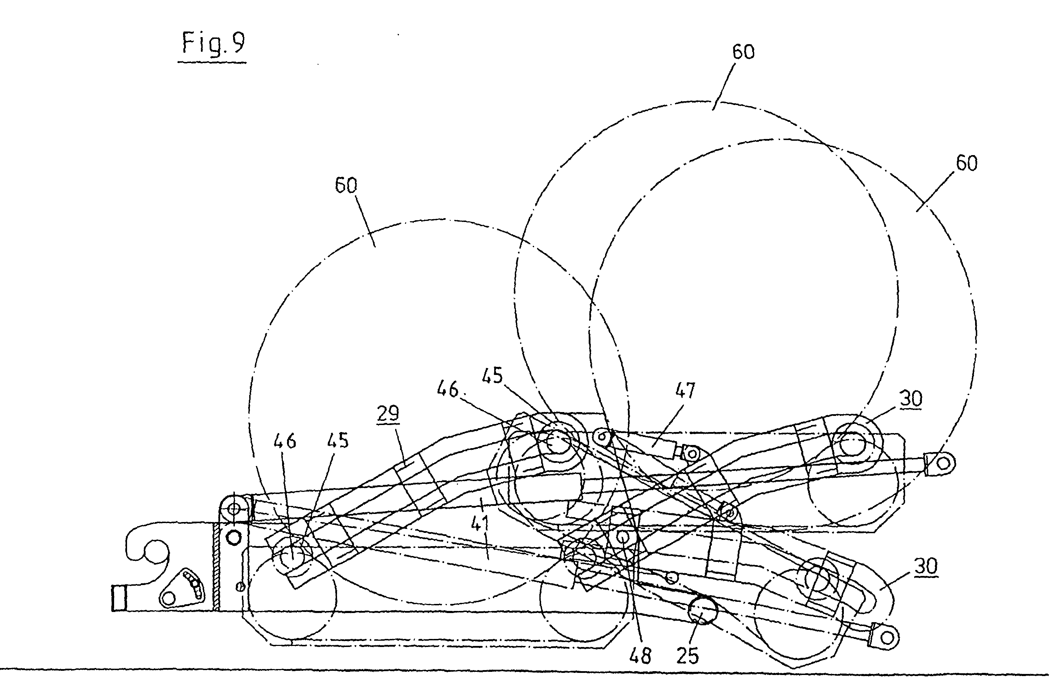

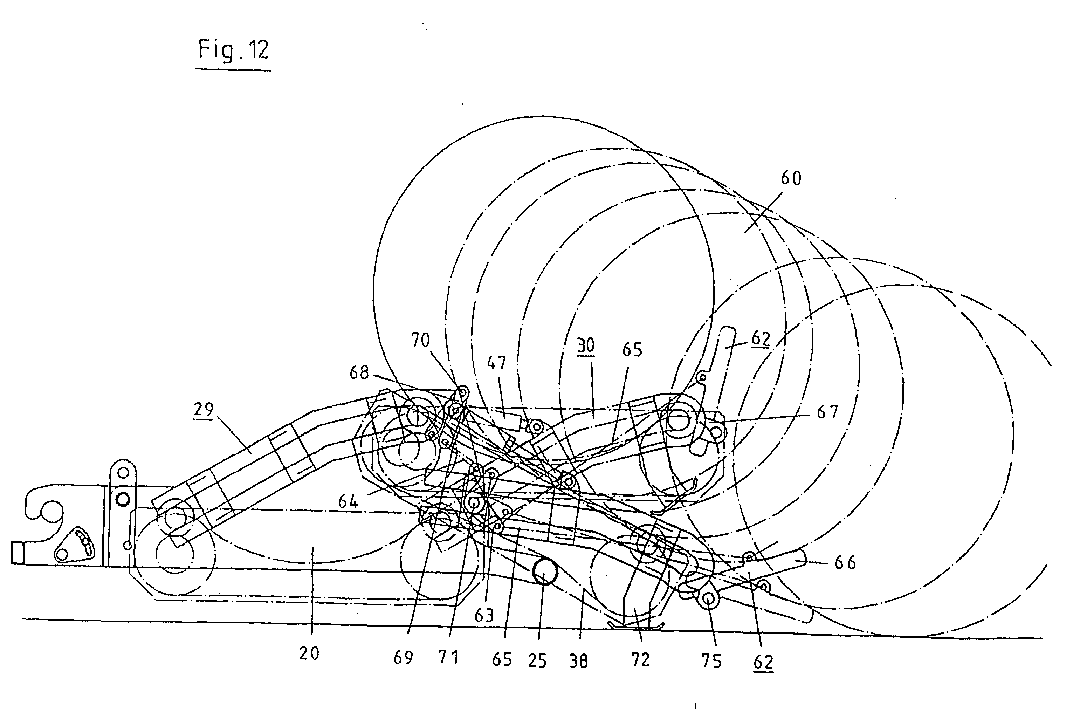

Die Stellzylinder 41 können im Weiteren dazu verwendet werden, die gesamte Verpackungsvorrichtung 2 gegenüber der Ballenpresse 1 anzuheben, wenn zwischen dem Anlenkpunkt des feststehenden Teils des Stellzylinders 41 und den Wicklerseitenwänden 20 ein bewegliches, horizontales Gelenk 56 angeordnet und der Wickeltisch 22 in den Führungsschienen 29, 30 durch beispielsweise einen Nutenstein blockiert ist. Die Ausführung des beweglichen Gelenks 56 ist beispielsweise der Figur 3 entnehmbar, in der das Gelenk 56 zwischen Aufhängung 12 und den nach hinten fortgeführten Wicklerseitenwänden 20 angeordnet ist. Das Gelenk 56 besteht aus einem Bolzen 57 und einer vertikalen Anschlagfläche 58 der Aufhängung 12, an der die vordere nach oben abgerundete Kante 59 der Wicklerseitenwand 20 anliegt und durch den in einer Bohrung einliegenden Bolzen 57 gehalten wird. In der angehobenen Position der Verpackungsvorrichtung 2 wird die Bauweise der Zuganordnung verkürzt und die Manövrierfähigkeit erhöht, wobei gleichzeitig auch eine Rückwärtsfahrt der Zugeinheit ermöglicht wird über einen weiteren Stellzylinder 47 besteht darüber hinaus die Möglichkeit, die hinteren Führungsschienen 30, welche über ein Drehgelenk 48 verschwenkbar an den Wicklerseitenwänden 20 gelagert sind, nach hinten abzusenken und somit das selbsttätige Abrollen des fertig umwickelten Rundballens zu erreichen. Der genaue Bewegungsablauf des Rundballens beim Ausstoß aus der Ballenpresse 1, während des Transportes bzw. beim Ablegen auf dem Feld ist in den Figuren 5 bis 7 gezeigt, während in Figur 8 das Anheben der Verpackungsvorrichtung 2 und in Figur 9 und 12 das Absenken der hinteren Führungsschienen 30 gezeigt ist. Oberhalb des Wickeltisches 22 ist der Tragarm 23 angeordnet, welcher aus zwei vertikalen Stützen 50 und zwei horizontalen Querstreben 51 besteht. Die horizontalen Stützen 50 sind in ihrem unteren Fußpunkt über eine Konsole 52 mit der Wicklerseitenwand 20 verbunden, beispielsweise verschraubt oder verschweigt. Die oberen Querstreben 51 sind mittig über dem Wickeltisch 22 zusammengeführt und weisen ein Lager 53 auf, in welchem die beiden Wickelarme 24 horizontal drehbar gelagert und über einen Antriebsmotor 54 bewegbar sind. An den unteren freien Enden der Wickelarme 24 sind die Folienrollen 55 befestigt, welche zum Einwickeln der Rundballen vorgesehen sind. Der Wickelvorgang gestaltet sich derart, dass die beiden Wickelrollen 37 über die Zahnkränze 49 angetrieben werden und somit den Rundballen drehen, während gleichzeitig die beiden Wickelarme 24 mit den Folienrollen 55 um den Rundballen herumgeführt werden. Die besondere Art der Aufhängung des Tragarmes 23, seitlich an den Wicklerseitenwänden 21 führt im Weiteren dazu, dass die Klappenöffnung 5 der Ballenpresse 1 freibeweglich dazu, dass die Klappenöffnung 5 der Ballenpresse 1 freibeweglich zwischen den horizontalen Stützen 50 und vertikalen Querstreben 51 bewegbar ist und somit der Rundballen ohne Behinderung ausgeworfen werden kann. Eine Voraussetzung ist jedoch, dass die beiden Wickelarme 24 in ihrer Grundposition annähernd quer zur Fahrtrichtung festgelegt sind. Gleiches gilt beim Anheben der Verpackungsvorrichtung 2.

Figur 5 zeigt eine schematische Seitenansicht der Ballenpresse 1 mit geöffneter Klappenöffnung 5 und der Transportvorrichtung zur Aufnahme des Rundballens 60 sowie dem Bewegungsablauf beim Auswurf. Der Rundballen 60 fällt nach dem Öffnen der Klappenöffnung 5 auf die Transportvorrichtung, d. h. den Wickeltisch 22, welcher über die vorher beschriebenen Stellzylinder 41 in die unterste Position unterhalb der Klappenöffnung 5 gefahren wurde und bleibt in der Mulde 61 zwischen den beiden Wickelrollen 37 und den Wickeltischbändern 38 liegen.

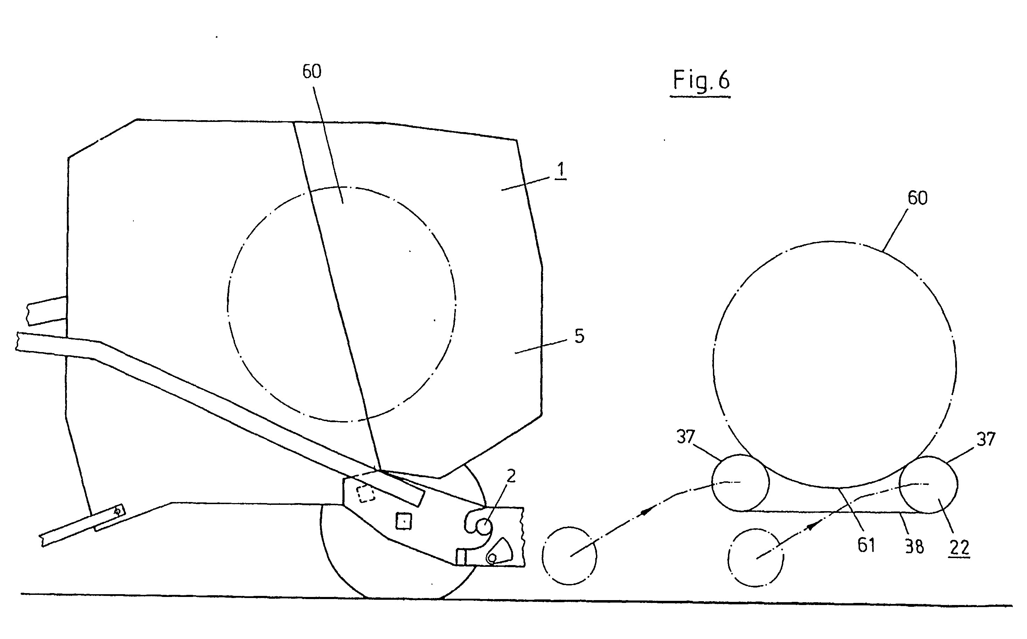

Figur 6 zeigt eine schematische Seitenansicht der Rundballenpresse 1 aus Figur 1 und der Transportvorrichtung mit Bewegungsablauf des Rundballens 60 beim Transport zur nicht dargestellten Verpackungsvorrichtung. Die Transportvorrichtung, d. h. der Wickeltisch 22 wird zusammen mit dem fertig gewickelten Rundballen 60 von der unteren Position in der Nahe der Öffnungsklappe 5 durch eine gleichzeitige vertikale und horizontale Verschiebung in die obere Position zur weiteren Bearbeitung verfahren, wobei sich diese Endposition unterhalb der nicht dargestellten Wickelarme befindet. Bereits während des Transportes kann mit der Wicklung eines weiteren Rundballens 60 begonnen werden.

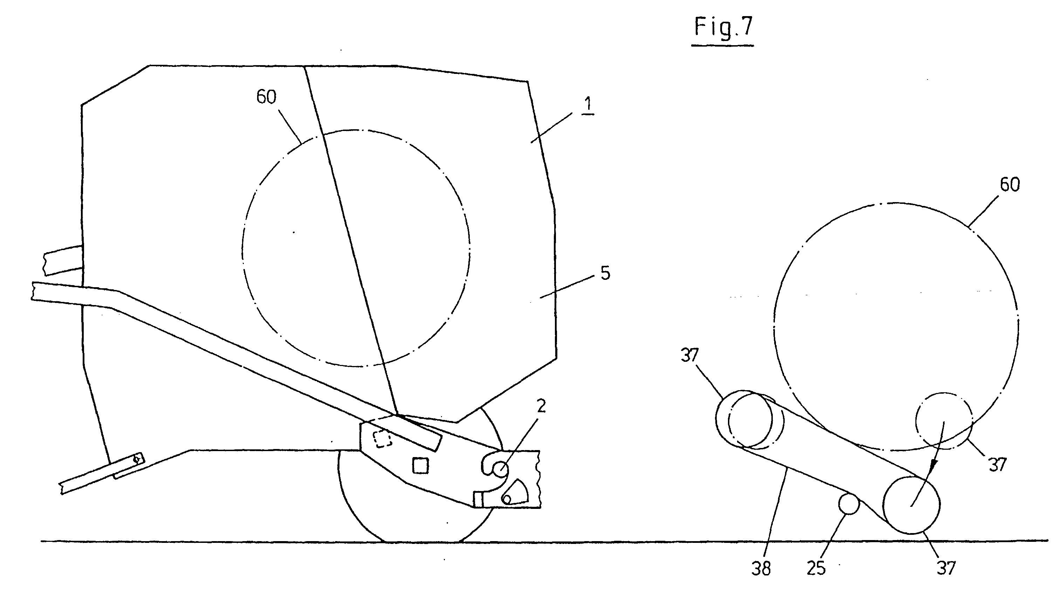

Figur 7 zeigt eine schematische Seitenansicht der Rundballenpresse 1 und der Transportvorrichtung mit Bewegungsablauf des Rundballens 60 beim Ablegen von der Transportvorrichturig. Der fertig umwickelte Rundballen 60 wird durch ein Absenken der hinteren Führungsschienen 30 des Wickeltisches 22, wie bereits ausgeführt, zum selbstständigen Abrollen veranlasst, wobei die Wickeltischbänder 38 auf die Rolle 25 zwischen den beiden Wicklerseitenwänden 20 gedrückt und gleichzeitig im oberen Bereich gespannt werden, so dass der Rundballen 60 besser und leichter abrollen kann.

Figur 8 zeigt eine vereinfachte Seitenansicht der Transport in einer angehobenen Position zum Fahren auf der Straße oder im Feld. In dieser Darstellung ist nur die Wicklerseitenwand 20, die vorderen und hinteren Führungsschienen 29, 30, die Hubrollen 45 und Hubrollenachsen 46 sowie die Wickelrollen 37 und die Aufhängung der Verpackungsvorrichtung 3 gezeigt. Zwischen dem Anlenkpunkt des Stellzylinders 41 und den Wicklerseitenwänden 20 ist ein horizontal bewegliches Gelenk 56 angeordnet, weiches einerseits ein Anheben der Verpackungsvorrichtung 3 ermöglicht und anderseits durch die außermittige nach oben versetzte Position und der senkrechten Anschlagfläche 58 eine nahezu starre Verbindung zwischen den Wicklerseitenwänden 20 und der Aufhängung 12 an der Ballenpresse 1 durch das Eigengewicht der Verpackungsvorrichtung 3 ermöglicht. Ggf. kann durch einen Bolzen eine Verriegelung des Gelenkes 56 vorgenommen werden. Angehoben wird die Verpackungsvorrichtung 3 durch die seitlichen Stellzylinder 41 um einen Winkel von cirka 30 Grad, wenn der Wickeltisch 22 in den Führungsschienen 29, 30 durch beispielsweise einen Nutenstein blockiert ist. Der nicht dargestellte Nutenstein wird hierbei am hinteren Ende der Führungsschiene 30 zwischen den Rundrohren 44 mit einer an die Hubrolle angepaßten Wölbung vor den hinteren Hubrollen 45 eingeklemmt und durch einen Verriegelungsbolzen gehalten.

Figur 9 zeigt eine vereinfachte Seitenansicht der Verpackungsvorrichtung 3 mit der Aufnahmeposition und der Wickelposition des Wickeltisches 22 sowie in einer abgesenkten Position der hinteren Führungsschienen 30 zum Ablegen des Rundballens 60. In dieser Darstellung ist nur die Wicklerseitenwand 20, die vorderen und hinteren Führungsschienen 29, 30, die Hubrollen 45 und Hubrollenachsen 46 sowie die Wickelrollen 37 mit den Wickeltischbändern 38 gezeigt. Der von der Ballenpresse 1 aufgenommene Rundballen 60 wird von der Verpackungsvorrichtung 3 umwickelt und anschließend durch ein Absenken der hinteren Führungsschienen 30 des Wickeltisches 22, wie bereits ausgeführt, zum selbstständigen Abrollen veranlasst, wobei die Wickeltischbänder 38 auf die Rolle 25 zwischen den beiden Wicklerseitenwänden gedrückt und gleichzeitig im oberen Bereich gespannt werden, so dass der Rundballen 60 leichter abrollen kann.

Figur 10 zeigt einen Teilschnitt gemäß der Verbindungslinie A - A und Figur 11 zeigt einen Teilschnitt gemäß der Verbindungslinie B - B durch die Führungsschienen 29, 30, und zwar einmal mit Hubrolle 45 und Hubrollenachse 46 sowie dem antreibbaren Zahnkranz 49 und einmal mit Drehgelenk 48 zwischen hinterer Führungsschiene 30 und Wicklerseitenwand 20.

Figur 12 zeigt eine vereinfachte Seitenansicht der Verpackungsvorrichtung 3 gemäß Figur 3 oder 9 miteiner zusätzlichen Ballenbremse 62. Die Verpackungsvorrichtung 3 ist in verschiedenen Positionen der hinteren Führungsschienen 30 bzw. des Wickeltisches 22 mit Rundballen 60 gezeigt, wobei die Ballenbremse 62 in der Wickelposition in der Grundstellung und in der abgesenkten Position zusätzlich zum Boden hin verschwenkt abgebildet ist. Die Ballenbremse 62 besteht aus zwei seitlichen Tragarmen 66, die verschwenkbar an den hinteren Führungsschienen 30 über jeweils eine Konsole 67 befestigt und durch eine aus der Seitenansicht nicht erkennbare Querstange miteinander verbunden sind. Die Konsolen 67 können beispielsweise an den hinteren Führungsschienen 30 angeschweißt sein und weisen jeweils einen Anlenkpunkt 73 für die Tragarme 66 auf. Betätigt wird die Ballenbremse 62 im gezeigten Ausführungsbeispiel durch den Stellzylinder 47, welcher zur Absenkung der hinteren Führungsschienen 30 verwendet wird. Alternativ besteht die Möglichkeit einen zusätzlichen Stellzylinder zu verwenden. Damit die Ballenbremse 62 erst mit erfolgter Absenkung des Wickeltisches 22 gelöst wird, ist eine Umlenkmechanik erforderlich, die aus einem ersten Hebelarm 68, einer ersten Schubstange 64, einem Umlenkhebel 63 sowie einer zweiten Schubstange 65 besteht.

Die Bewegung der Ballenbremse 62 erfolgt mittelbar durch den Stellzylinder 47 der hinteren Führungsschienen 30, wobei der Stellzylinder 47 zum Absenken der hinteren Führungsschienen 30 einenends mittig an einem um eine Drehachse 70 verschwenkbaren Hebelarm 68 und anderenends an den hinteren Führungsschienen 30 befestigt ist und wobei der Hebelarm 68 zum Anheben der hinteren Führungsschienen abstützend an einem Anschlag 69 anliegt und an dem freien Ende des Hebelarms eine Schubstange 64 befestigt ist, die mit einem um eine Drehachse 71 verschwenkbaren Winkelhebel 63 verbunden ist, an dessen zweiten Ende eine mit den Tragarmen 66 der Ballenbremse 62 verbundene Schubstange 65 befestigt ist. Wenn die hinteren Führungsschienen 30 eine Endposition erreicht haben, beispielsweise wenn der Fuß 72 auf dem Boden aufgesetzt hat, wird die Bewegung des auseinanderfahrenden Stellzylinders 47 durch den vom Anschlag weg bewegten Hebelarm 68 und die erste Schubstange 64 auf den Winkelhebel 63 übertragen und durch die dadurch bewegte zweite Schubstange 65 die Ballenbremse 62 gelöst. Beim Anheben der hinteren Führungsschienen 30 wird der Hebelarm 68 zunächst auf den Anschlag 69 zu bewegt und somit die Ballenbremse 62 in die Ausgangsstellung zurückgefahren. Nach erfolgter Anlage des Hebelarms 68 am Anschlag 69 erfolgt anschließend das Anheben der hinteren Führungsschienen 30 in die ursprüngliche Wickelposition des Wickeltisches 22.

### Bezugszeichenliste

- 1: Ballenpresse
- 2: Anbauvorrichtung
- 3: Verpackungsvorrichtung
- 4: Gehäuse
- 5: Klappenöffnung
- 6: Achse
- 7: Rad
- 8: Längsstrebe
- 9: Zugdeichsel
- 10: Konsole
- 11: Zapfen
- 12: Aufhängung
- 13: Verriegelungsbolzen
- 14: Strebe
- 15: Stützrad
- 16: Rundballen
- 17: Verriegelungskeil
- 18: Anschlag
- 19: Konsole
- 20: Wicklerseitenwand
- 21: Rahmengestell
- 22: Wickeltisch
- 23: Tragarm
- 24: Wickelarm
- 25: Rolle
- 26: Schenke
- 27: Abstellstütze
- 28: Ansatz
- 29: Führungsschiene
- 30: Führungsschiene
- 31: Abstellstütze
- 33: Fußteil
- 34: Kurbel
- 35: Wickeltischseitenwand
- 36: Achse
- 37: Wickelrolle
- 38: Wickeltischband
- 40: Zapfen
- 41: Stellzylinder
- 42: Zapfen
- 43: Konsole
- 44: Rundrohr
- 45: Hubrolle
- 46: Hubrollenachse
- 47: Stellzylinder
- 48: Drehgelenk
- 49: Zahnkranz
- 50: Stütze
- 51: Querstrebe
- 52: Konsole
- 53: Lager
- 54: Antriebsmotor
- 55: Folienrolle
- 56: Gelenk
- 57: Bolzen
- 58: Anschlagfläche
- 59: Kante
- 60: Rundballen
- 61: Mulde
- 62: Ballenbremse
- 63: Winkelhebel
- 64: Schubstange
- 65: Schubstange
- 66: Tragarm
- 67: Konsole
- 68: Hebelarm
- 69: Anschlag
- 70: Drehpunkt
- 71: Drehpunkt
- 72: Fuß
- 73: Anlenkpunkt

## Patentansprüche

1. Vorrichtung zum Pressen und Umwickeln von Rundballen aus Heu, Halbheu, Stroh oder ähnlichem Halmgut, bestehend aus einer Ballenpresse (1) und einer Verpackungsvorrichtung (3), welche beide über zumindest einem sich auf Laufrädern abstützenden Rahmengestell miteinander verbunden sind und einer in Längsrichtung bewegbaren Transportvorrichtung, welche einen fertig gewickelten Rundballen (60) von der Ballenauswurföffnung zur Verpackungsvorrichtung (3) transportiert,
**dadurch gekennzeichnet,**
**dass** die Transportvorrichtung den fertigen Rundballen (60) nach Auswurf aus der Ballenpresse (1) durch eine zumindest in einem Teilbereich gleichzeitige vertikale und horizontale Bewegung nach hinten anhebend zur Verpackungsvorrichtung (3) bewegt und die Transportvorrichtung von einem mit einer elektronischen Neigungsregelung ausgestatteten Wickeltisch (22) gebildet wird, wobei die Neigungsregelung den Wickeltisch (22) zumindest während des Wickelvorganges unabhängig von der Arbeitslage der Verpackungsvorrichtung (3) in der Horizontalen hält.

2. Vorrichtung nach Anspruch 1,
**dadurch gekennzeichnet,**
**dass** die Transportvorrichtung aus einem zumindest in einem Teilbereich gleichzeitig vertikal und horizontal beweglichen Wickeltisch (22) besteht.

3. Vorrichtung nach Anspruch 1 oder 2,
**dadurch gekennzeichnet,**
**dass** die Klappenöffnung (5) der Ballenpresse (1) unabhängig von der Position der Transportvorrichtung mit oder ohne Rundballen (60) zu öffnen oder zu schließen ist.

4. Vorrichtung nach Anspruch 2,
**dadurch gekennzeichnet,**
**dass** der Wickeltisch (22) aus einem Rahmenelement (35) besteht, in dem mindestens zwei antreibbare und quer zur Längsrichtung beabstandete Wickelrollen (37) drehbar gelagert sind, welche in Längsrichtung angeordnete Wickeltischbänder (38) aufweisen.

5. Vorrichtung nach Anspruch 4,
**dadurch gekennzeichnet,**
**dass** das Rahmenelement (35) vier Hubrollenachsen (46) aufweist, welche diametral und paarweise gegenüberliegend angeordnet und über eine Hubrolle (45) in jeweils einer schräg verlaufenden und nach hinten ansteigenden Führungsschiene (29,30) verschiebbar gelagert sind.

6. Vorrichtung nach Anspruch 4,
**dadurch gekennzeichnet,**
**dass** die Führungsschienen (29,30) jeweils diametral gegenüberliegend und parallel verlaufend mit dem Rahmengestell (21) verbunden sind, wobei zumindest die hinteren Führungsschienen (30) über ein Drehgelenk (48) schwenkbar an dem Rahmengestell (21) befestigt sind.

7. Vorrichtung nach einem oder mehreren der Ansprüche 1 bis 6,
**dadurch gekennzeichnet,**
**dass** die Hubrollenachsen (46) des Wickeltisches (22) mit Hubrollen (45) und Gleitlagern in den Führungsschienen (29,30) über zumindest einen Steilzylinder (41) verfahrbar gelagert sind.

8. Vorrichtung nach einem oder mehreren der Ansprüche 1 bis 7,
**dadurch gekennzeichnet,**
**dass** die Führungsschienen (29,30) des Wickeltisches (22) schräg verlaufend und nach hinten ansteigend ausgebildet sind, wobei zumindest an einem Ende ein horizontal verlaufender Führungsansatz ausgebildet ist.

9. Vorrichtung nach einem oder mehreren der Ansprüche 1 bis 7,
**dadurch gekennzeichnet,**
**dass** die Führungsschienen (29,30) des Wickeltisches (22) im mittleren Bereich abgewinkelt oder gebogen ausgebildet sind.

10. Vorrichtung nach einem oder mehreren der Ansprüche 1 bis 7,
**dadurch gekennzeichnet,**
**dass** die Führungsschienen (29,30) des Wickeltisches (22) im vorderen, unteren Bereich zunächst flach ansteigend und anschließend stärker ansteigend ausgebildet sind.

11. Vorrichtung nach einem oder mehreren der Ansprüche 1 bis 10,
**dadurch gekennzeichnet,**
**dass** das Rahmengestell (21) mit den jeweils diametral gegenüberliegenden Führungsschienen (29,30) mittels eines weiteren oder der vorhandenen Stellzylinder (41) über ein Gelenk (62) anhebbar ausgebildet ist.

12. Vorrichtung nach Anspruch 6,
**dadurch gekennzeichnet,**
**dass** die hinteren diametral gegenüberliegenden Führungsschienen (30) über einen weiteren Stellzylinder (47) nach Beendigung des Wickelvorganges nach hinten absenkbar ausgebildet sind.

13. Vorrichtung nach einem oder mehreren der Ansprüche 1 bis 12,
**dadurch gekennzeichnet,**
**dass** nach Beendigung des Wickelvorganges und dem Absenken der hinteren Führungsschienen (30) eine fest mit dem Rahmengestell (21) verbundene Rolle (25) gegen die Wickeltischbänder (38) von unten drückt und die Wickeltischbänder im oberen Bereich spannt.

14. Vorrichtung nach einem oder mehreren der Ansprüche 1 bis 13,
**dadurch gekennzeichnet,**
**dass** das Rahmengestell (21) bzw. die hinteren Führungsschienen (30) eine Ballenbremse (62) aufweisen, welche schwenkbar und quer zur Längsrichtung mit dem Rahmengestell (21) bzw. den Führungsschienen (30) über eine Konsole (67) verbunden ist.

15. Vorrichtung nach einem oder mehreren der Ansprüche 1 bis 14,
**dadurch gekennzeichnet,**
**dass** die Ballenbremse (62) aus zwei seitlichen um einen Drehpunkt verschwenkbaren Tragarmen (66) besteht, welche über eine Querstange miteinander verbunden sind und den Rundballen (60) halten.

16. Vorrichtung nach Anspruch 15,
**dadurch gekennzeichnet,**
**dass** die Ballenbremse (62) unmittelbar durch einen weiteren Stellzylinder oder über einen Umlenkhebel (63) und mindestens eine Schubstange (64, 65) absenkbar ist.

17. Vorrichtung nach Anspruch 16,
**dadurch gekennzeichnet,**
**dass** der Stellzylinder (47) zum Absenken der hinteren Führungsschienen (30) einenends mittig an einem um eine Drehachse (70) verschwenkbaren Hebelarm (68) und anderenends an den hinteren Führungsschienen (30) befestigt ist, wobei der Hebelarm (68) zum Anheben der hinteren Führungsschienen (30) abstützend an einem Anschlag (69) anliegt und an dem freien Ende des Hebelarms (68) eine Schubstange (64) befestigt ist, die mit einem um eine Drehachse (71) verschwenkbaren Winkelhebel (72) verbunden ist, an dessen zweiten Ende eine mit den Tragarmen (66) verbundene Schubstange (65) befestigt ist.

18. Vorrichtung nach einem oder mehreren der Ansprüche 1 bis 17,
**dadurch gekennzeichnet,**
**dass** das Rahmengestell (21) im hinteren Bereich einen beim Absenken der hinteren Führungsschienen (30) auf den Boden aufsetzenden Fuß (72) aufweist.

19. Vorrichtung nach einem oder mehreren der Ansprüche 1 bis 18,
**dadurch gekennzeichnet,**
**dass** die Verbindung zwischen Ballenpresse (1) und Verpackungsvorrichtung (3) starr durch ein Rahmengestell (21) oder durch zwei über mindestens ein Drehgelenk miteinander verbundene Rahmengestelle erfolgt, welches eine vertikale Schwenkbewegung vorsieht.

20. Vorrichtung nach einem oder mehreren der Ansprüche 1 bis 19,
**dadurch gekennzeichnet,**
**dass** das Rahmengestell (21) der Verpackungsvorrichtung (3) über eine verriegelbare starre Aufhängung (12) mit dem Rahmengestell der Ballenpresse (1) verbindbar ist.

21. Vorrichtung nach einem oder mehreren der Ansprüche 1 bis 20,
**dadurch gekennzeichnet,**
**dass** die Achse (6) der Laufräder (7) gegenüber der Ballenpresse (1) entgegen der Hauptfahrtrichtung durch eine dem Schwerpunkt angepasste Verlagerung nach hinten und/oder unten versetzt angeordnet ist oder zusätzliche anhängbare Laufräder für die Verpackungsvorrichtung (3) vorgesehen sind.

22. Vorrichtung nach einem oder mehreren der Ansprüche 1 bis 21,
**dadurch gekennzeichnet,**
**dass** die Verpackungsvorrichtung (3) ein Traggestell für einen Wickelarm (24) aufweist, welches aus zumindest zwei vertikalen Stützen (50) und mindestens zwei miteinander im Drehpunkt der Wickelarme (24) verbundene horizontale oder schräg verlaufende Stützen (51) besteht, wobei die vertikalen Stützen (51) seitlich neben der Ballenauswurfsöffnung der Ballenpresse (1) mit dem Rahmengestell (21) verbunden sind.

23. Vorrichtung nach einem oder mehreren der Ansprüchen 1 bis 22,
**dadurch gekennzeichnet,**
**dass** das Traggestell V- oder U-förmig zur Ballenpresse (1) hin geöffnet ist und die seitlichen Stützen (50) derart beabstandet sind, dass die Klappenöffnung der Ballenpresse (1) zwischen den seitlichen Stützen (50) frei beweglich ist.

24. Vorrichtung nach einem oder mehreren der Ansprüche 1 bis 23,
**dadurch gekennzeichnet,**
**dass** die Verpackungsvorrichtung (3) oder das Rahmengestell (21) mit zumindest einem drehbar gelagerten und mitlaufenden Rad ausgestattet ist.

## Claims

1. An arrangement for pressing and wrapping round bales of hay, haylage, straw or similar stalk material, comprising a bale press (1) and a packaging apparatus (3) which are both connected together by way of at least one frame structure supported on wheels and a transport apparatus which is movable in the longitudinal direction and which transports a finished wound round bale (60) from the bale ejection opening to the packaging apparatus (3), **characterised in that** the transport apparatus moves the finished round bale (60) after ejection from the bale press (1) rearwardly in a rising path to the packaging apparatus (3) by a vertical and horizontal movement at the same time at least in one region, and the transport apparatus is formed by a wrapping table (22) equipped with an electronic inclination regulating means, wherein the inclination regulating means holds the wrapping table (22) horizontally at least during the wrapping operation independently of the working position of the packaging apparatus (3).

2. An arrangement according to claim 1 **characterised in that** the transport apparatus comprises a wrapping table (22) which is movable vertically and horizontally at the same time at least in one region.

3. An arrangement according to claim 1 or claim 2 **characterised in that** the flap opening (5) of the bale press (1) is to be opened or closed independently of the position of the transport apparatus with or without round bales (60).

4. An arrangement according to claim 2 **characterised in that** the wrapping table (2) comprises a frame element (35) in which there are rotatably mounted at least two drivable wrapping rollers which are spaced transversely with respect to the longitudinal direction and which have wrapping table belts (38) arranged in the longitudinal direction.

5. An arrangement according to claim 4 **characterised in that** the frame element (35) has four lift roller shafts (46) which are arranged in diametrally paired opposite relationship and are mounted displaceably by way of a lift roller (45) in a respective inclinedly extending and rearwardly rising guide rail (29, 30).

6. An arrangement according to claim 4 **characterised in that** the guide rails (29, 30) are respectively connected in diametrally opposite and parallel relationship to the frame structure (21), wherein at least the rear guide rails (30) are fixed pivotably by way of a rotary joint (48) to the frame structure (21).

7. An arrangement according to one or more of claims 1 to 6 **characterised in that** the lift roller shafts (46) of the wrapping table (22) are mounted displaceably with lift rollers (45) and sliding bearings in the guide rails (29, 30) by way of at least one control cylinder (41).

8. An arrangement according to one or more of claims 1 to 7 **characterised in that** the guide rails (29, 30) of the wrapping table (22) are designed to extend inclinedly and rise rearwardly, wherein a horizontally extending guide projection is provided at least at one end.

9. An arrangement according to one or more of claims 1 to 7 **characterised in that** the guide rails (29, 30) of the wrapping table (22) are of an angled or bent configuration in the central region.

10. An arrangement according to one or more of claims 1 to 7 **characterised in that** the guide rails (29, 30) of the wrapping table (22) are designed in the front lower region to initially rise shallowly and then to rise more sharply.

11. An arrangement according to one or more of claims 1 to 10 **characterised in that** the frame structure (21) with the respective diametrally opposite guide rails (29, 30) is adapted to be liftable by way of a pivot (62) by means of a further control cylinder or the control cylinders (41) which are present.

12. An arrangement according to claim 6 **characterised in that** the rear diametrally opposite guide rails (30) are adapted to be lowerable rearwardly by way of a further control cylinder (47) after termination of the wrapping operation.

13. An arrangement according to one or more of claims 1 to 12 **characterised in that** after termination of the wrapping operation and after lowering of the rear guide rails (30) a roller (25) which is fixedly connected to the frame structure (21) presses from below against the wrapping table belts (38) and tensions the wrapping table belts in the upper region.

14. An arrangement according to one or more of claims 1 to 13 **characterised in that** the frame structure (21) or the rear guide rails (30) respectively have a bale brake (62) which is connected pivotably and transversely with respect to the longitudinal direction to the frame structure (21) or the guide rails (30) respectively by way of a bracket (67).

15. An arrangement according to one or more of claims 1 to 14 **characterised in that** the bale brake (62) comprises two lateral carrier arms (66) which are pivotable about a pivot point and which are connected together by way of a transverse bar and hold the round bale (60).

16. An arrangement according to claim 15 **characterised in that** the bale brake (62) can be lowered directly by a further control cylinder or by way of a deflection lever (63) and at least one thrust bar (64, 65).

17. An arrangement according to claim 16 **characterised in that** the control cylinder (47) for lowering the rear guide rails (30) is fixed at one end centrally to a lever arm (68) pivotable about an axis of rotation (70) and at the other end to the rear guide rails (30), wherein the lever arm (68) for lifting the rear guide rails (30) bears in supporting relationship against an abutment (69) and fixed to the free end of the lever arm (68) is a thrust bar (64) connected to an angle lever (72) which is pivotable about an axis of rotation (71) and to the second end of which is fixed a thrust bar (65) connected to the carrier arms (66).

18. An arrangement according to one or more of claims 1 to 17 **characterised in that** in the rear region the frame structure (21) has a leg (72) which upon lowering of the rear guide rails (30) can be set on the ground.

19. An arrangement according to one or more of claims 1 to 18 **characterised in that** the connection between the bale press (1) and the packaging apparatus (3) is effected rigidly by a frame structure (21) or by two frame structures connected together by way of at least one rotary joint which provides for a vertical pivotal movement.

20. An arrangement according to one or more of claims 1 to 19 **characterised in that** the frame structure (21) of the packaging apparatus (3) can be connected to the frame structure of the bale press (1) by way of a lockable rigid suspension means (12).

21. An arrangement according to one or more of claims 1 to 20 **characterised in that** the axle (6) of the wheels (7) is arranged displaced with respect to the bale press (1) in opposite relationship to the main direction of travel by a shift adapted to the centre of gravity rearwardly and/or downwardly or there are provided additional attachable wheels for the packaging apparatus (3).

22. An arrangement according to one or more of claims 1 to 21 **characterised in that** the packaging apparatus (3) has a carrier frame for a wrapping arm (24), which carrier frame comprises at least two vertical supports (50) and at least two horizontal or inclinedly extending supports (51) which are connected together at the point of rotation of the wrapping arms (24), wherein the vertical supports (51) are connected laterally beside the bale ejection opening of the bale press (1) to the frame structure (21).

23. An arrangement according to one or more of claims 1 to 22 **characterised in that** the carrier frame is open in a V-shape or U-shape towards the bale press (1) and the lateral supports (50) are so spaced that the flap opening of the bale press (1) is freely movable between the lateral supports (50).

24. An arrangement according to one or more of claims 1 to 23 **characterised in that** the packaging apparatus (3) or the frame structure (21) is provided with at least one rotatably mounted wheel which runs therewith.

## Revendications

1. Dispositif pour compresser et emballer des balles rondes de foin, d'herbes mi-fanées, de paille ou de produit à tiges similaire, comprenant une presse à balles (1) et un dispositif d'emballage (3), qui sont liés l'un à l'autre par au moins un châssis reposant sur des roues porteuses, ainsi qu'un dispositif de transport mobile dans la direction longitudinale, qui transporte une balle ronde (60) terminée de l'ouverture d'éjection des balles jusqu'au dispositif d'emballage (3), **caractérisé par le fait que** le dispositif de transport, par un déplacement simultané dans les directions verticale et horizontale sur au moins une portion de course, déplace la balle ronde (60) terminée, après éjection hors de la presse à balles (1), vers l'arrière et vers le haut jusqu'au dispositif d'emballage et que le dispositif de transport est formé d'une table d'emballage (22) équipée d'une régulation d'inclinaison électronique, la régulation d'inclinaison électronique maintenant la table d'emballage (22) dans la position horizontale au moins pendant le processus d'emballage, indépendamment de la position de travail du dispositif d'emballage (3).

2. Dispositif selon la revendication 1, **caractérisé par le fait que** le dispositif de transport est formé d'une table d'emballage (22) qui, au moins sur une portion, peut être déplacée simultanément dans les directions verticale et horizontale.

3. Dispositif selon la revendication 1 ou 2, **caractérisé par le fait que** la trappe (5) de presse à balles (1) peut être ouverte ou fermée indépendamment de la position du dispositif de transport avec ou sans balle ronde (60).

4. Dispositif selon la revendication 2, **caractérisé par le fait que** la table d'emballage (22) est formée d'un cadre (35) dans lequel au moins deux rouleaux d'emballage (37) entraînés, espacés l'un de l'autre transversalement à la direction longitudinale, sont montés tournants, lesquels rouleaux portent des bandes de table d'emballage (38) qui sont disposées dans la direction longitudinale.

5. Dispositif selon la revendication 4, **caractérisé par le fait que** le cadre (35) présente quatre axes de galets élévateurs (46) diamétralement opposés, disposés par paires, qui sont montés avec possibilité de déplacement par l'intermédiaire d'un galet élévateur (45) chacun dans un rail de guidage (29, 30) incliné, qui s'élève en direction de l'arrière.

6. Dispositif selon la revendication 4, **caractérisé par le fait que** les rails de guidage (29, 30) diamétralement opposés et mutuellement parallèles sont liés au châssis (21), au moins les rails de guidage (30) arrière étant fixés de manière pivotante au châssis (21) par l'intermédiaire d'une articulation tournante (48).

7. Dispositif selon une ou plusieurs des revendications 1 à 6, **caractérisé par le fait que** les axes de galets élévateurs (46) de la table d'emballage (22) avec des galets élévateurs (45) peuvent être déplacés dans les rails de guidage (29, 30) à l'aide d'au moins un vérin réglage (41)

8. Dispositif selon une ou plusieurs des revendications 1 à 7, **caractérisé par le fait que** les rails de guidage (29, 30) de la table d'emballage (22) sont inclinés et s'élèvent en direction de l'arrière, un élément de guidage horizontal étant aménagé à au moins une extrémité.

9. Dispositif selon une ou plusieurs des revendications 1 à 7, **caractérisé par le fait que** les rails de guidage (29, 30) de la table d'emballage (22) sont pliés ou cintrés dans leur portion médiane.

10. Dispositif selon une ou plusieurs des revendications 1 à 7, **caractérisé par le fait que** les rails de guidage (29, 30) de la table d'emballage (22) dans leur portion avant inférieure, s'élèvent d'abord faiblement, puis s'élèvent plus fortement.

11. Dispositif selon une ou plusieurs des revendications 1 à 10, **caractérisé par le fait que** le châssis (21) avec les rails de guidage (29, 30) diamétralement opposés peut être relevé à l'aide d'un vérin de réglage (41) supplémentaire ou du vérin de réglage existant grâce à une articulation (62).

12. Dispositif selon la revendication 6, **caractérisé par le fait que** les rails de guidage (30) arrière diamétralement opposés peuvent être abaissés vers l'arrière à la fin du processus d'emballage à l'aide d'un vérin de réglage (47) supplémentaire.

13. Dispositif selon une ou plusieurs des revendications 1 à 12, **caractérisé par le fait que** le processus d'emballage terminé et après abaissement des rails de guidage (30) arrière, un rouleau solidaire du châssis (21) exerce une pression par le dessous sur les bandes (38) de table d'emballage et tend lesdites bandes dans la partie supérieure.

14. Dispositif selon une ou plusieurs des revendications 1 à 13, **caractérisé par le fait que** le châssis (21) ou les rails de guidage (30) arrière comportent un frein de balle (62) qui peut pivoter et est lié au châssis (21) ou aux rails de guidage (30) transversalement à la direction longitudinale par l'intermédiaire d'un console (67).

15. Dispositif selon une ou plusieurs des revendications 1 à 14, **caractérisé par le fait que** le frein de balle (62) est formé de deux bras supports (66) latéraux, qui pivotent autour d'un point de rotation, sont reliés entre eux par une tige transversale et retiennent la balle ronde (60).

16. Dispositif selon la revendication 15, **caractérisé par le fait que** le frein de balle (62) peut être abaissé de manière directe par un vérin supplémentaire ou par l'intermédiaire d'un levier de renvoi (63) et d'au moins une biellette (64, 65).

17. Dispositif selon la revendication 16, **caractérisé par le fait que** le vérin de réglage (47) pour l'abaissement des rails de guidage (30) arrière, à une extrémité est fixé au milieu d'un bras de levier (68) pivotant autour d'un axe de rotation (70) et à son autre extrémité est fixé aux rails de guidage (30) arrière, le bras de levier (68), pour relever les rails de guidage (30) arrière, prenant appui sur une butée (69) et une biellette (64 étant fixée à l'extrémité libre du bras de levier (68), laquelle biellette est reliée à un levier coudé (72) monté pivotant autour d'un axe de rotation (71) et à la seconde extrémité duquel est fixée une biellette (65) liée aux bras porteurs (66).

18. Dispositif selon une ou plusieurs des revendications 1 à 17, **caractérisé par le fait que** le châssis (21) dans sa partie arrière présente un pied (72), qui prend appui sur le sol lors de l'abaissement des rails de guidage (30) arrière.

19. Dispositif selon une ou plusieurs des revendications 1 à 18, **caractérisé par le fait que** la liaison entre la presse à balles (1) et le dispositif d'emballage (3) est réalisée de manière rigide par le biais d'un châssis (21) ou de deux châssis liés l'un à l'autre par au moins une articulation, qui autorise un pivotement vertical.

20. Dispositif selon une ou plusieurs des revendications 1 à 19, **caractérisé par le fait que** le châssis (21) du dispositif d'emballage (3) peut être lié au châssis de la presse à balles (1) par un moyen d'accrochage (12) rigide verrouillable.

21. Dispositif selon une ou plusieurs des revendications 1 à 20, **caractérisé par le fait que** l'axe (6) des roues porteuses (7), par rapport à la presse à balles (1), est décalé vers l'arrière et/ou vers le bas dans la direction opposée à la direction de déplacement principale en fonction du centre de gravité ou que des roues porteuses additionnelles adaptables sont prévues pour le dispositif d'emballage (3).

22. Dispositif selon une ou plusieurs des revendications 1 à 21, **caractérisé par le fait que** le dispositif d'emballage (3) présente un bâti support pour un bras d'emballage (24) qui comprend au moins deux montants (50) verticaux et au moins deux montants (51) horizontaux ou inclinés liés entre eux au niveau du point de rotation des bras d'emballage (24), les montants verticaux (5o étant liés au châssis latéralement dans le voisinage de l'ouverture d'éjection des balles de la presse à balles (1).

23. Dispositif selon une ou plusieurs des revendications 1 à 22, **caractérisé par le fait que** le bâti support est ouvert en V ou en U en direction de la presse à balles (1) et que les montants latéraux (50) sont espacés l'un de l'autre de manière à permettre le libre déplacement de la trappe de la presse à balles (1) entre lesdits supports latéraux (50).

24. Dispositif selon une ou plusieurs des revendications 1 à 23, **caractérisé par le fait que** le dispositif d'emballage (3) ou le châssis (21) est équipé d'au moins une roue montée pivotante.
